## Europäisches Patentamt
## European Patent Office
## Office européen des brevets

(19)

(11) Veröffentlichungsnummer: **0 156 244**
**B1**

(12) # EUROPÄISCHE PATENTSCHRIFT

(45) Veröffentlichungstag der Patentschrift:
31.05.89

(21) Anmeldenummer: 85102828.2

(22) Anmeldetag: 12.03.85

(51) Int. Cl.⁴: **C 05 F 7/00 //**
**(C05C7/00, C05G3:00)**

(54) **Verfahren zur Herstellung eines Bodenverbesserungsmittels.**

(30) Priorität: 14.03.84 DE 3409274

(43) Veröffentlichungstag der Anmeldung:
02.10.85 Patentblatt 85/40

(45) Bekanntmachung des Hinweises auf die Patenterteilung:
31.05.89 Patentblatt 89/22

(84) Benannte Vertragsstaaten:
AT BE CH DE FR GB IT LI NL SE

(56) Entgegenhaltungen:
DE-A-2 758 010
GB-A-305 346
GB-A-609 431

CHEMICAL ABSTRACTS, Band 71, Nr. 1, 7. Juli 1969,
Seite 237, Nr. 2649h, Columbus, Ohio, US; & CS - A -
128 274 (M. BARTUNEK u.a.) 15.07.1968

Die Akte enthält technische Angaben, die nach
dem Eingang der Anmeldung eingereicht wurden
und die nicht in dieser Patentschrift enthalten sind.

(73) Patentinhaber: **Stadt Darmstadt, vertreten durch
den Magistrat, Luisenplatz 5, D-6100 Darmstadt
(DE)**

(72) Erfinder: **Holtz, Dieter, Dr., Graupnerweg 42,
D-6100 Darmstadt (DE)**

(74) Vertreter: **Katscher, Helmut, Dipl.- Ing.,
Bismarckstrasse 29, D-6100 Darmstadt (DE)**

## Beschreibung

Die Erfindung betrifft ein Verfahren zur Herstellung eines Bodenverbesserungsmittels durch Mischen von teilentwässertem Klärschlamm mit einem mineralischen Material.

Die bei der Abwasserreinigung kontinuierlich anfallenden Klärschlämme werden bisher überwiegend nach entsprechender Stabilisierung entweder in flüssiger Form in der Landwirtschaft verwertet oder nach Aufbereitung bzw. Teilentwässerung mit Kammerfilterpressen, Siebbandpressen oder Zentrifugen mit nachfolgender Branntkalkkonditionierung auf Deponien verbracht oder verbrannt.

Die Verwendung von Klärschlämmen in der Landwirtschaft ist nur außerhalb der Vegetationsperiode, also maximal acht Monate pro Jahr möglich. Durch die in der Bundesrepublik Deutschland geltende Klärschlammverordnung (AbfKlärV) vom 25. Juni 1982 (Bundesgesetzblatt 1982, Teil I, S. 734 ff.) wird u.a. die Menge der aufzubringenden Schlämme pro Hektar und Jahr eingeschränkt, so daß eine Vollentsorgung in der Landwirtschaft und die Rückführung wertvoller Dünge- und humusbildender Substanzen in den natürlichen Kreislauf auch hei Einhaltung der übrigen Grenzwerte der Klärschlammverordnung in der Praxis nicht möglich ist.

Die Verfahren zur Aufbereitung von Klärschlämmen als Vorbereitung für Deponierung oder Verbrennung erfordern hohen technologischen Aufwand mit bedeutenden Investitions- und Betriebskosten mit zusätzlicher Beanspruchung von Deponiekapazität bei Verlust volkswirtschaftlich relevanter Mengen von Dünge- und Humusstoffen.

Bei einem bekannten Verfahren (DE-A-2 950 333) werden Chemikalien zugesetzt, die zu einer Absenkung des pH-Wertes in den sauren Bereich führen, wodurch sich Schwierigkeiten bei der Landbaulichen Verwertung, insbesondere auf schwach gepufferten Böden, ergeben können.

Die bei einem anderen bekannten Verfahren (DE-A-2 732 297) durchgeführte thermische Schlammkonditionierung verursacht eine Denaturierung des organischen Anteils der Schlämme bzw. der durch bakterielle Zersetzung entstandenen Abbauprodukte und eine Inaktivierung der biologischen Umsetzungsprozesse in den Schlämmen.

Bei einem bekannten Verfahren der eingangs genannten Gattung (GB-A-305 346) wird Kesselasche oder aus Haushalten stammende Asche mit teilentwässertem Klärschlamm gemischt. Diese Asche ist vollständig oder doch ganz überwiegend feinpulverig und hat keine poröse, schwammartige große Oberfläche. Deshalb entsteht auch kein körniges Dodenverbesserungsmittel, das in erster Linie bereits durch seine Struktur als Bodenverbesserungsmittel wirkt.

Mit diesem bekannten Verfahren mag zwar bei ausreichendem Trocknungsvorgang ein bröckeliges Material entstehen, das zweifellos auch als Düngemittel geeignet ist, weil sowohl Klärschlamm als auch Asche Düngeeigenschaften haben. Die Wirkung des so erhaltenen Produktes auf den Boden ist aber auf die Düngewirkung beschränkt; eine strukturelle Verbesserung des Bodens kann damit nicht erreicht werden.

Bei einem anderen bekannten Verfahren (GB-A-609 431) werden Staub, Asche und Schlacken mit Klärschlamm gemischt. Hierbei wird kein körniges, poröses Trägermaterial verwendet, das beim Mischen mit Klärschlamm von diesem ummantelt werden könnte. Ebenso wie bei dem vorher erwähnten bekannten Verfahren wird auch nur ein Düngemittel gewonnen, das jedoch keine strukturelle Bodenverbesserung ergibt.

Aus der DE-A-2 273 010 ist es bekannt, Urgesteinsmehl mit Klärschlamm zu mischen. Hierbei dient das Urgesteinsmehl, das nicht körnig sein soll, jedoch dazu, den noch sehr stark wasserhaltigen Klärschlamm zu koagulieren, so daß ein stichfester Bioschlamm entsteht, der anschließend auf chemische Weise, nämlich durch Zusatz von mineralischen Salzen, faulfest gemacht, d.h. stabilisiert wird. Das verwendete Urgesteinsmehl (z. B. Basalt, Schiefer) soll in möglichst feinpulveriger Form, nämlich als Mehl, vorliegen. Dieses Verfahren greift nicht auf einen durch Ausfaulen stabilisierten Klärschlamm zurück, sondern enthält die Verwendung von Mineralsalzen als wesentliches Verfahrensmerkmal.

Der Erfindung liegt daher die Aufgabe zugrunde, ein Verfahren zur Herstellung eines lager- und streufähigen Bodenverbesserungsmittels unter Verwendung von aerob und anaerob stabilisiertem Klärschlamm zu schaffen, das eine Möglichkeit für die ganzjährige Klärschlammentsorgung ergibt, wobei im Gegensatz zur Deponierung oder Verbrennung von Klärschlämmen ein technisch oder wirtschaftlich verwertbares Bodenverbesserungsmittel erhalten wird, so daß die in den Klärschlämmen vorhandenen Dünge- und Humusstoffe zur Bodenverbesserung rückgewonnen werden sollen.

Diese Aufgabe wird erfindungsgemäß dadurch gelöst, daß der Klärschlamm durch Ausfaulen stabilisiert wird und daß der Klärschlamm nach Zugabe eines biologisch abbaubaren Flockungsmittels auf einen Trockensubstanzgehalt von etwa 20 % gebracht und in einem Mischungsverhältnis von etwa 1 : 2 mit einem körnigen, porösen Trägermaterial von Ölschieferschlacke, Lavaschlacke, Tuffstein oder Bims gemischt wird, bis ein erdähnliches, körniges Bodenverbesserungsmittel mit ca. 95 % mineralischen und 5 % organischen Bestandteilen in der Trockensubstanz und einem Wasseraufnahmevermögen von ca. 35 Gewichts-% entsteht.

Das Verfahren stellt einerseits eine Alternative zu den übrigen Klärschlammentsorgungsmöglichkeiten (Verwertung von nicht entwässerten Faulschlämmen in der Landwirtschaft, Deponierung oder Verbrennung von vorbehandelten Schlämmen) dar, andererseits entsteht durch die Kombination zweier Abfallstoffe ein technisch verwertbares Produkt mit ausgeprägten Dünge- und Bodenverbesserungseigenschaften.

Im Unterschied zu dem aus der DE-A-2 950 333 bekannten Verfahren werden bei der Herstellung des Produktes außer gegebenenfalls der Zugabe von biologisch abbaubaren Flockungsmitteln bei der Teilentwässerung keine weiteren Chemikalien zugesetzt, so daß sich auch keine Absenkung des pH-Wertes in den sauren Bereich ergibt, der zu Schwierigkeiten bei der landbaulichen Verwertung, insbesondere auf schwach gepufferten Böden, führen kann. Außerdem bleiben die im Schlamm enthaltenen Humusbestandteile wegen des Verzichtes auf eine weitere chemische und/oder physikalische Behandlung in ihrer natürlichen Form erhalten und wirken so als Substrat für die Bodenbakterien.

Im Gegensatz zu der bekannten thermischen Schlammkonditionierung (DE-A-2 732 297), die eine Denaturierung des organischen Anteiles der Schlämme bzw. der durch bakterielle Zersetzung entstandenen Abbauprodukte verusacht und eine Inaktivierung der biologischen Umsetzungsprozesse in den Schlämmen bewirkt, wurde auf eine weitergehende chemische bzw. physikalische Aufbereitung der Klärschlämme ebenso verzichtet, wie auch - zur Erzielung eines erdähnlichen Materials - auf den Zusatz von organischen Materialien (Kohlenstoffträgern). Demgegenüber wurde die Ummantelung eines mineralischen Trägermaterials mit großer, verzahnter Oberfläche und hohem Wasserretentionsvermögen erreicht.

Im Unterschied zu Kompostmaterialien muß das Bodenverbesserungsmittel zur Herstellung des Kontaktes mit dem Boden nicht eingearbeitet, sondern kann in einer Schichthöhe von 5 bis 10 cm und mehr ohne weiteres aufgebracht und verteilt werden. Die so behandelten Flächen zeigen auch in Hanglagen und auf Böschungen auf Grund der Struktur des Materials keinerlei Erosionserscheinungen, wie entsprechend angelegte Versuchsflächen ausweisen. Durch den hohen mineralischen Anteil und die Körnung ist das Material auch durch große mechanische Belastung kaum zu verdichten und behält seine luftdurchlässige Struktur, was ohne weitere technische Vorkehrungen eine eventuelle Nachrottung bei der Lagerung oder dem Aufbringen auf Bodenflächen zuläßt.

Die Begutachtung des Bodenverbesserungsmittels durch die Hessische Landwirtschaftliche Versuchsanstalt Kassel-Herleshausen (Bundesrepublik Deutschland) im Jahre 1983 ergab u.a. neben hohen Gehalten der Pflanzennährstoffe Phosphor, Calcium und Magnesium eine ausgesprochen niedrige Belastung des Produktes mit Schwermetallen, vor allem der toxisch wirksamen. Aufwuchsversuche mit Deutschem Weidelgras (Lolium perenne) erbrachten auf leichten und mittelschweren Böden und dem Bodenverbesserungsmittel im Mischungsverhältnis 100 % : 0 % bis 0 % : 100 % eine signifikante Ertragssteigerung bei höheren Anteilen des Bodenverbesserungsmittels. Die absoluten Höchstbeträge wurden auf 100 % Bodenverbesserungsmittel erzielt, währen ein Zusatz von 40 % des Bodenverbesserungsmittels im Mittel auf den verschiedenen Bodenarten berechnet auf den niedrigsten Bodenverbesserungsmittel-Aufwand zum statistisch gesicherten Höchstertragsbereich führte. Wachstumsbeeinträchtigungen infolge zu hohen sauerstoffbedarfes des Bodenverbesserungsmittels konnten auch in den Varianten mit extrem hohen Bodenverbesserungsmittel-Ateilen nicht beobachtet werden. Diese Ergebnisse wurden durch die Versuchsreihe 1984 (Nachwirkungsjahr) bestätigt, bei welcher die Versuchsböden aus dem Jahr 1983 ohne erneute Behandlung vor der Vegetationsperiode für Ertragsuntersuchungen an Hafer und Raps verwendet wurden. Auf 100 % Bodenverbesserungsmittel ließ sich im Vergleich zu reinen Sand- und- Lehmböden eine Ertragssteigerung von 15 - 16 % erzielen. Bei den toxikologisch bedenklichen Schwermetallen Cadmium, Blei und Quecksilber konnte eine Anreicherung im Pflanzenmaterial in Abhängigkeit vom steigenden Anteil des Bodenverbesserungsmittels in der Bodenmischung nicht nachgewiesen werden.

Die mit der Erfindung erzielten Vorteile bestehen insbesondere darin, daß im Gegensatz zur Verwertung von flüssigen Faulschlämmen in der Landwirtschaft durch die Aufarbeitung zu einem Bodenverbesserer zeitunabhängig eine ganzjährige, sinnvolle Entsorgung erzielt werden kann, weil das Material lagerfähig ist und die in den Klärschlämmen enthaltenen Dünge- und Humusbestandteile erhalten bleiben. Im Gegensatz zu diesem technisch und wirtschaftlich verwertbaren Produkt stellen für die Ablagerung auf Deponien oder zur Verbrennung aufbereitete Klärschlämme nicht weiter verwendbare Abfallprodukte dar. Auf Grund des mineralischen Anteiles des Bodenverbesserers ist das Material erdähnlich und läßt sich problemlos auch auf Böschungen einbauen. Zur Herstellung des Produktes sind lediglich relativ einfache, in der Praxis seit langem bewährte technische Komponenten, wie Schlamm-Entwässerungsanlagen, sowie Misch- und Fördereinrichtungen erforderlich.

Vorzugsweise wird der Klärschlamm vor dem Mischen mit dem Trägermaterial mittels einer Zentrifuge auf einen Trockensubstanzgehalt von etwa 20 % gebracht.

Bevorzugt wird ein Mischungsverhältnis des Klärschlamms mit dem Trägermaterial von etwa 1: 2. Günstig ist es, wenn das Trägermaterial, beispielsweise Ölschieferschlacke, auf eine Korngröße von 0 bis 8 mm gesiebt wird. Für das Mischen des Klärschlamms mit dem Trägermaterial wird zweckmäßigerweise ein Doppelwellenmischer verwendet.

Außer Ölschieferschlacke können als Trägermaterialien auch andere poröse mineralische, überwiegend körnige Materialien verwendet werden, beispielsweise Hochofenschlacke, Lavaschlacke, Tuffstein oder Bims.

## Patentansprüche

1. Verfahren zur Herstellung eines Bodenverbesserungsmittels durch Mischen von teilentwässertem Klärschlamm mit einem mineralischen Material, dadurch gekennzeichnet, daß der Klärschlamm durch Ausfaulen stabilisiert wird und daß der Klärschlamm nach Zugabe eines biologisch abbaubaren Flockungsmittels auf einen Trockensubstanzgehalt von etwa 20 % gebracht und in einem Mischungsverhältnis von etwa 1 : 2 mit einem körnigen, porösen Trägermaterial von Ölschieferschlacke, Lavaschlacke, Tuffstein oder Bims gemischt wird, bis ein erdähnliches, körniges Bodenverbesserungsmittel mit ca. 95 % mineralischen und 5 % organischen Bestandteilen in der Trockensubstanz und einem Wasseraufnahmevermögen von ca. 35 Gewichts-% entsteht.

2. Verfahren nach Anspruch 1, dadurch gekennzeichnet, daß das Trägermaterial auf eine Korngröße von höchstens 8 mm gesiebt wird.

## Revendications

1. Procédé de fabrication d'un agent pour améliorer le sol, par mélange d'une boue d'épuration partiellement déshydratée avec un matériau minéral caractérisé en ce qu'on stabilise la boue d'épuration par digestion et en ce qu'on porte la boue d'épuration à une teneur en matières sèches d'environ 20 %, après addition d'un agent de floculation biologiquement dégradable et on la mélange avec un matériau de support poreux, granuleux, à base de scorie de schiste bitumineux, de lave, de tuf ou de pierre ponce dans le rapport d'environ 1 : 2, jusqu'à ce qu'on obtienne un agent pour améliorer le sol, granuleux, semblable à la terre, contenant environ 95 % de composants minéraux et 5 % de composants organiques dans la matière sèche et présentant un pouvoir d'absorption d'eau d'environ 35 % en poids.

2. Procédé selon la revendication 1 caractérisé en ce que le matériau de support est tamisé de manière à contenir des particules ayant une dimension de tout au plus 8 mm.

## Claims

1. Method far making a soil-improving agent by mixing a partially dehydrated sewage sludge with a mineral material, characterised by the fact that the sewage sludge is stabilised by rotting out and that the sewage sludge is brought to a dry-matter content of about 20 % after adding a biologically degradable flocculant and is mixed in a mixing ratio of about 1 : 2 with a granular, porous carrier material of oil shale slag, lava slag, tuffstone or pumice, until a soil-like granular soil-improving agent, with about 95 % mineral components and 5 % organic components in the dry matter and a water absorption capacity of about 35 % by weight is formed.

2. Method according to Claim 1, characterised by the fact that the carrier material is screened to a grain size of pot more than 8 mm.